## Europäisches Patentamt
## European Patent Office
## Office européen des brevets

(11) Publication number: **0 000 811**
**B1**

(12) **EUROPEAN PATENT SPECIFICATION**

(45) Date of publication of patent specification: **17.02.82**

(21) Application number: **78300161.3**

(22) Date of filing: **18.07.78**

(51) Int. Cl.³: **G 03 B 7/26, G 03 B 7/08**

(54) Camera having an automatic control mechanism and piezoelectric energy conversion means.

(30) Priority: **18.07.77 US 816776**
**18.07.77 US 816834**
**18.07.77 US 816835**
**29.07.77 US 820488**
**14.11.77 US 851321**

(43) Date of publication of application:
**21.02.79 Bulletin 79/4**

(45) Publication of the grant of the European patent:
**17.02.82 Bulletin 82/7**

(84) Designated Contracting States:
**DE FR GB**

(56) References cited:
**US - A - 2 856 564**
**US - A - 4 001 844**

(73) Proprietor: **EASTMAN KODAK COMPANY**
**343 State Street**
**Rochester, New York 14650 (US)**

(72) Inventor: **Lee, Fitzpatrick Frank**
**30 Rock Beach Road**
**Rochester, New York (US)**
Inventor: **Lee, James Kelly**
**20 Medallion Drive**
**Rochester, New York (US)**

(74) Representative: **Trangmar, Leigh Alan**
**P.O. Box 114 246 High Holborn**
**London WC1V 7EA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Camera having an automatic control mechanism and piezoelectric energy conversion means

The invention relates to a camera having an automatic control mechanism which mechanism includes a circuit having an element having an electrical parameter which varies as a function of a scene characteristic.

Such automatic control mechanisms, for example, automatic exposure control mechanisms, generally include an optically responsive electrical circuit which converts a characteristic of a sensed scene into an electrical signal, which signal controls or drives a mechanical function or setting of the cameras.

Such devices require two types of energy. First, the circuit requires electrical energy. Second, controlling the mechanical function or setting requires mechanical energy.

The electrical energy is generally supplied by a battery. The mechanical energy may be supplied by the operator along with supplying some other mechanical function of the camera, for example, depression of the camera shutter releases advancement of film or cocking of the shutter. It may also be supplied by a battery through an electrical-mechanical transducer, for example, an electromagnet, electrical motor or solenoid.

One of the predominant characteristics of recent camera design is a drive for lightness and compactness. Batteries are heavy, bulky, expensive and eventually fail requiring replacement. Electromagnets, motors and solenoids are also heavy, bulky, expensive and generally require the substantial power supplied by a battery. U.S. Patent 3,598,030 and British Patent Specification 1,365,560 show induction generator sources of electrical energy for exposure control mechanisms. While each of these structures eliminate batteries, they have not found commercial acceptance perhaps because of the expense of the elements themselves or their size and weight. A proposal to use a manually powered generator of the piezoelectric type for flash photography has been made in U.S. Patent 2856564 (Derwin), and another proposal, in U.S. Patent 3518930 (Thieme et al) has an automatic exposure control mechanism driven by battery power but including a magnetostrictive or an electrostrictive material acting as an electrical-to-mechanical transducer.

The invention is intended to solve the problems associated with batteries and induction generators as sources of electrical power and electromagnets, motors and solenoids as sources of mechanical power in cameras. This is accomplished by substitution of these devices with piezoelectric elements. Piezoelectric elements do not normally need replacement. They are extremely light, can be made flat and are easily assembled into a camera. They require extremely small amounts of mechanical force to provide high voltage when used as a generator. When used as a transducer to convert electrical energy into mechanical energy, they react very rapidly to extremely small amounts of energy.

A piezoelectric element can be used in either the conversion of mechanical energy into electrical energy or the conversion of electrical energy into mechanical energy. However, the piezoelectric element generates high voltage, low current energy as a generator and requires high voltage, low current energy as an electrical-mechanical transducer. Thus, they are remarkably complementary. The invention contemplates the use of piezoelectric elements in both functions.

According to a preferred embodiment of the invention, the piezoelectric element is in the form of a piezoelectric bender which bends in response to application of electrical energy and produces electrical energy in response to bending.

Various ways of carrying out the invention are described in detail below with reference to the drawings, in which:

Figs. 1 and 2 are schematic views of a portion of a camera in accordance with an embodiment of the invention, each figure showing the camera in a different stage of operation;

Fig. 3 is a schematic view of a portion of a camera in accordance with another embodiment of the invention;

Figs. 4—7 are schematic views of a portion of a camera in accordance with another embodiment of the invention, each figure showing the camera at a different stage of operation;

Fig. 8 is a circuit diagram for the embodiment shown in Figs. 4—7.

Fig. 9 is a perspective view of another embodiment of the invention;

Fig. 10 is a circuit diagram for a camera constructed according to the embodiment shown in Fig. 9;

Figs. 11—14 are schematic views of the embodiment shown in Fig. 9, each figure showing the camera at a different stage of operation;

Figs. 15—17 are schematic views of a portion of a camera in accordance with another embodiment of the invention, each figure showing the camera at a different state of operation;

Fig. 18 is a schematic view of a portion of a camera showing a variation of the embodiment shown in Figs. 15—17;

Fig. 19 is a perspective view of another embodiment of the invention;

Fig. 20 is a circuit diagram of the embodiment shown in Fig. 19;

Figs. 21—23 are schematic views of the embodiment shown in Fig. 19, each figure showing the camera in a different stage of operation.

A "piezoelectric bender" is a term used herein to describe an elongated piezoelectric element which exhibits the mechanical aspect of its piezoelectricity by bending or being bent. Multimorphs (see U.S. Patent 3,110,824) and bimorphs are examples of piezoelectric benders. A bimorph is a member composed of two strips of piezoelectric material joined together with the direction of expansion of one strip aligned with the direction of contraction of the other. The application of an electric potential difference between the strips causes one to expand and the other to contract. This produces a bending of the combination in a manner analogous to the curling of a bimetallic strip due to differential expansion when heat is applied. Until the potential difference is removed, the bimorph will remain bent. If a bimorph is physically bent, an electric potential difference tending to return the bimorph to its original configuration will develop from one strip to the other strip. That potential difference will remain until either the potential is externally removed or the bimorph is unflexed. If the bimorph is physically bent and the originally created potential difference dissipated, such as by shorting, the unbending of the bimorph by external force or its own internal spring force will produce an electric potential of a polarity opposite to that of the original potential produced when the bimorph was first bent. The potential will resist the forces (e.g., internal spring force) tending to return the bimorph to its original configuration.

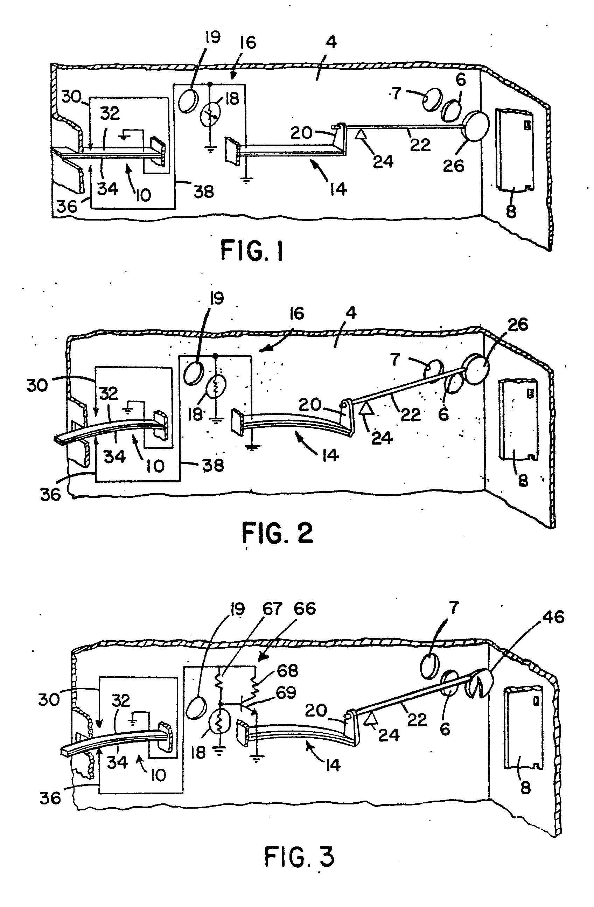

Figures 1 and 2 illustrate the invention in a simple form. A camera, which includes a housing 4 and a lens 6 behind an exposure aperture 7, is adapted to receive photographic film 8. A piezoelectric generator, for example a manually accessable bimorph generator 10, is fixed at one end of the camera housing 4 in cantilever fashion, and is electrically connected to a similarly mounted electrical-mechanical piezoelectric transducer, for example a bimorph motor 14, by a circuit 16 which includes a photoresponsive element 18, for example, a CdS cell aligned with an exposure control aperture 19 in housing 4. Bimorph motor 14 is flexibly attached by connecting member 20 to an arm 22 which is mounted for rotation around a pivot 24 and carries a shutter blade 26 normally aligned with the camera's exposure aperture 7.

In operation, bimorph generator 10 is manually depressed to the position shown in Fig. 2, which sequentially opens a contact 30, causes a voltage potential of a predetermined polarity to be developed across upper and lower plates 32 and 34 of generator 10 and brings lower plate 34 into engagement with electrical contact 36. The voltage across bimorph generator 10 is transferred via a connector 38 to bimorph motor 14, which is arranged such that the voltage polarity applied thereto will cause the upper strip of bimorph motor 14 to expand along the length of the bimorph and the lower strip to contract in that direction. Thus, bimorph motor 14 will bend as shown in Fig. 2 displacing its free end downwardly, causing arm 22 to rotate about pivot 24. This begins the exposure period by moving shutter blade 26 to its Fig. 2 position to uncover aperture 7.

Upon releasing manual pressure on bimorph generator 10, the generator and motor will remain in their displaced, Fig. 2 positions as long as the voltage remains across the bimorph plates. However, that voltage immediately begins to discharge through CdS cell 18 and both bimorphs begin to return to their initial positions. Therefore, the time which the exposure aperture is uncovered is a function of the electrical signal on bimorph 14 as determined by the electrical conductivity of CdS cell 18 (a function of the intensity of light incident thereon). As bimorph generator 10 returns almost to its initial position, it engages contact 30 somewhat before reaching its unflexed condition, thereby shorting the bimorph to cause it to return completely to its initial position.

Shutters built in accordance with the present invention exhibit a broad useful speed range. For example, a shutter was constructed which demonstrated speeds from 1/500 to 500 seconds (almost 18 stops) with an error of no more than ± 1/2 stop through its entire range of operation.

A double-exposure-prevention mechanism can be included so that once closed, shutter blade 26 cannot be reopened until the film has been advanced. Many such mechanisms will occur to those skilled in the art. For example, a switch can open connector 38 after exposure and be closable upon film advance.

Fig. 3 illustrates an embodiment of the invention in which aperture is varied instead of time. This embodiment differs from the Figs. 1 and 2 embodiment primarily in the substitution for shutter blade 26 of an aperture vane 46 and the substitution for circuit 16 of an aperture control circuit 66. The aperture control circuit 66 includes photoresponsive element 18 as part of a voltage dividing circuit including resistances 67 and 68 and a transistor 69.

When bimorph generator 10 is bent, a potential is created across bimorph motor 14 as in Figs. 1 and 2. However, with the Fig. 3 circuit the potential is a function of the resistance of photoresponsive element 18. Thus, aperture vane 46 moves a distance which is a function of the resistance of photoresponsive element 18. The exposure is made by a conventional shutter mechanism, not shown. The vane 46 is shaped according to any of many well known single vane aperture controls. Such vanes generally cooperate with stationary members (not shown) shaped to give the desired aperture. The arm 22 can also be constructed to drive a multiblade variable aperture according to many structures known in the art.

Leakage back to ground through element 18 will occur which will gradually change the position of the aperture vane. However, the camera is constructed so that exposure will already have occurred before this change is appreciable.

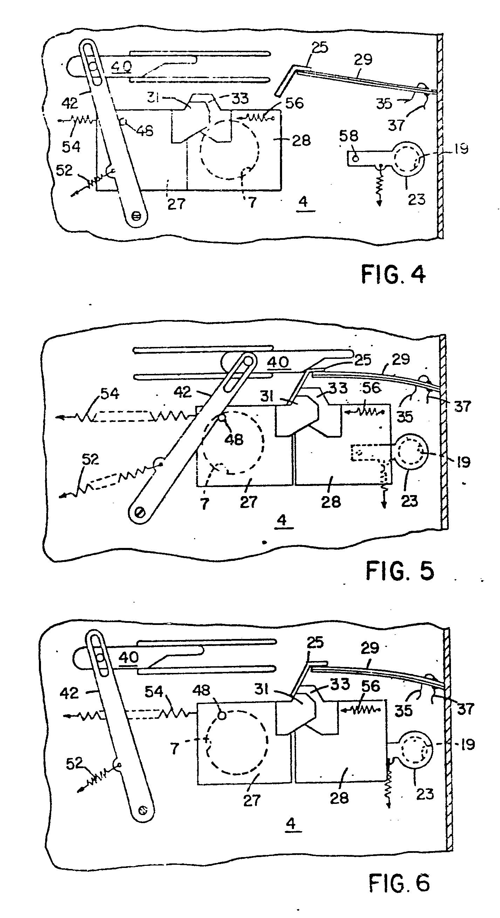

Figs. 4—8 illustrate another embodiment of the invention. In this embodiment a single piezoelectric bender performs both functions of the generator and the electrical-mechanical piezoelectric transducer. Further, the bender controls release of two members which begin and terminate exposure, respectively.

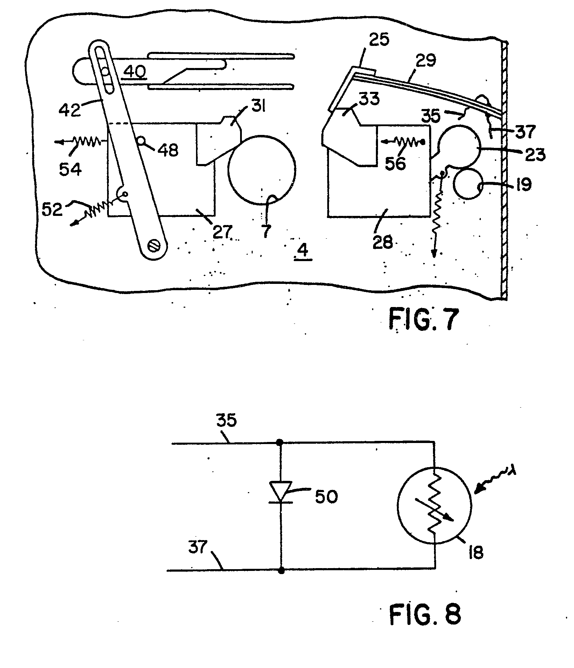

Referring to Fig. 4, a camera housing 4 has an exposure aperture 7. A pair of shutter blades, an opening blade 27 and a closing blade 28 are spring-urged to the left as shown. An exposure control aperture 19 in housing 4 is aligned with a photoresponsive element 18 (Fig. 8) of an exposure control circuit. Light, passing through exposure control aperture 19, is normally blocked from the photoresponsive element by a mask 23 pivotably mounted about a stud 58.

A piezoelectric bender, for example, bimorph 29 is fixed at one of its ends to housing 4 in cantilever fashion and carries a latch member 25 at the other end for co-operation with a pair of tabs 31 and 33 on shutter blades 27 and 28, respectively. Electrical leads 35 and 37 connect the respective plates of bimorph 29 and the electronics circuit of Fig. 8.

A reset mechanism for adjusting the shutter blades and the bimorph to a condition preparatory to taking a picture includes a slide cam 40 pivotally and slidably connected to a lever 42 which is itself rigidly connected to a manually operable crank, not shown, and pivotally mounted on housing 4 for movement parallel to the shutter blades.

Figs. 4—7 are schematic views of certain elements of the camera showing the elements in various stages of a complete cocking and exposure cycle. In Fig. 4, the camera elements are shown in their "run down" conditions where shutter blades 27 and 28 are in their left-hand positions and the closing blade 28 covers exposure aperture 7 and mask 23 covers exposure control aperture 19. Bimorph 29 is relaxed and unstressed and there is no voltage across the bimorph on leads 35 and 37.

In preparation for making an exposure, the operator manually rotates lever 42 in a clockwise direction (Fig. 4). Lever 42 engages a stud 48 on opening shutter blade 27 to move opening blade 27 and closing blade 28 to the right to their positions shown in Fig. 5. Lever 42 also moves slide cam 40 to the right. The cam surface engages latch member 25 to bend bimorph 29 until latch member 25 engages the top of blade 27, also as shown in Fig. 5.

Such flexing of bimorph 29 generates a potential across it. However, leads 35 and 37 conduct that potential to the electronics circuit shown in Fig. 8 where it is shorted by forward biased diode 50.

When lever 42 is released, a spring 52 returns the lever and slide cam 40 to their Fig. 4 positions. The force of springs 54 and 56 on the shutter blades, and the spring action of bimorph 29 itself, will cause the bimorph to begin to unbend. The unbending motion of the bimorph generates a potential which is of a sign which reverse biases diode 50. Therefore, the potential remains across the bimorph and acts to resist further unbending movement.

A point of equilibrium is reached where the spring forces tending to unbend the bimorph are just offset by the electromotive force resisting the the unbending movement. At that point, shown in Fig. 6, latch member 25 still retains tabs 31 and 33 to keep shutter blades 27 and 28 from running down.

In order to effect an exposure, the operator manually pivots mask 23 about stud 58 to allow scene light to reach photoresponsive element 18 (seen in Fig. 8). Element 18 will conduct electricity as a function of the amount of light striking it. A short time after the mask is moved out of alignment with exposure control aperture 19, sufficient charge has leaked from bimorph 29 through element 18 to allow bimorph 29 to unbend to an extent that latch member 25 releases tab 31 thereby releasing opening blade 27 to begin exposure as shown in Fig. 7. As the charge continues to leak through element 18 at a rate determined by the amount of light falling thereon, latch member 25 continues to move upwardly until tab 33 is also free, spring 56 moves closing blade 28 to the left as shown in Fig. 4, and exposure is terminated. The duration of exposure is, of course, and inverse function of the rate of leakage through photoresponsive element 18 as determined by the intensity of light impinging upon the element.

As depicted, the shutter blades are held in their cocked, Fig. 6, position by a balance of spring and electromotive forces. While bimorphs may be latched in selected positions without draining power, and will remain in such positions as long as the voltage across them is constant, one might want to provide means to prevent latch member 25 from being jarred from tab 31. Several mechanisms for accomplishing this function will readily occur to those skilled in the art, such as for example lever 42 might be latched in its Fig. 5 position with slide cam 40 over latch member 25 until exposure is desired. Or, one might choose to hold only the closing blade with the bimorph, while holding the opening blade with a conventional latch which is less likely to be jarred loose than a bimorph latch.

The feature of a single piezoelectric bender performing both the functions of a generator and an exposure controlling device has the advantages of simplicity and cost saving.

The feature of the piezoelectric bender controlling exposure by latching one or more spring driven shutter blades has the advantage of permitting use of larger mass shutters than would be practical if the shutter is driven by the piezoelectric bender as in the embodiment of Figs. 1 and 2.

The feature of beginning exposure with opening of the exposure control aperture has the advantage of low camera shutter release force requirements and less jarring of the camera than conventional shutter release mechanisms.

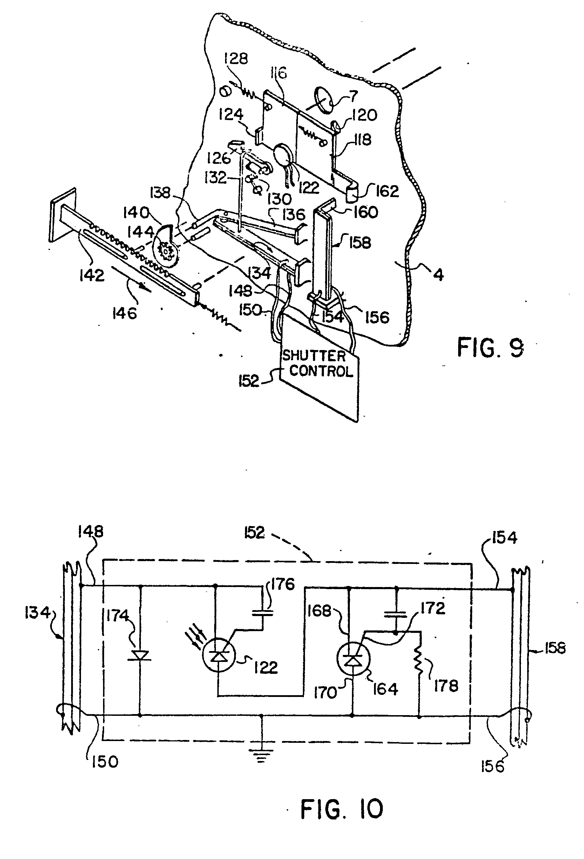

Figs. 9—14 show another embodiment of the invention in which a light sensitive circuit delays a signal from a piezoelectric generator as a function of scene light before transmitting it to an electrical-mechanical piezoelectric transducer which terminates exposure. Exposure is terminated by movement of an exposure terminating member, for example, a closing shutter blade.

Referring to Fig. 9, a camera housing 4 has an exposure aperture 7. Between the exposure aperture and the film plane, a pair of shutter blades, opening blade 116 and closing blade 118, are spring-urged to the left as shown. An exposure control aperture 130 in housing 4 is aligned with a photoresponsive element 122 for example, a light activated silicon controlled rectifier (LASCR), of an exposure control electronic circuit. Light, passing through aperture 120, is normally blocked from the photoresponsive element by opening blade 116, but reaches the element when the blade moves to the left to initiate exposure as will be explained hereinafter.

Opening blade 116 has a tab 124 which is engaged by a latch member 126 to hold the blade in an aperture closing position against the force of spring 128. Latch member 126 is held against tab 124 by a spring 130 and is connected by a rod 132 to the free end of a cantilever-mounted bimorph generator 134 so that downward movement of the free end of the bimorph will unlatch tab 124.

A strip of spring steel 136 is also cantilever-mounted to housing 4 and carries a strike at its free end movable between a cocked position and a released position. A rod 138, also at the free end of spring 136, extends into the path of a spiral cam 140 which is free to rotate relative to the housing 4 when a rack 142, geared to the cam by a pinion 144, and forming the camera shutter release, is moved in the direction of arrow 146. Pinion 144 is ratcheted to cam 140 so that return motion of rack 142 does not rotate the cam.

Bimorph generator 134 is electrically connected by leads 148 and 150 to an electronic shutter control circuit 152. Also connected to the shutter control circuit, by leads 154 and 156, is a bimorph motor 158 fixed at its lower end to housing 4 and carrying a protrusion 160. Protrusion 160 normally engages a latch 162 to hold closing shutter blade 118 out of alignment with exposure aperture 7. Latch 162 is thinner proximate its point of attachment to blade 118 so as to be quite flexible.

Referring now to Fig. 10, shutter control circuit 152 is shown in a preferred form. The circuit includes a silicon controlled rectifier (SCR) 164 and LASCR 122.

Normally, SCR 164 presents a very high resistance to current flowing from lead 168 (the cathode) to lead 170 (the anode). However, once a predetermined potential difference has been established between the cathode and the SCR's gate 172, the SCR triggers and current flows therethrough from cathode to anode.

LASCR 122 operates similarly except that the gate voltage of a LASCR will lead through that device to create a photocurrent which is a function of the light intensity falling upon the LASCR. It will be recalled that LASCR 122 is aligned with esposure control aperture 120, Fig. 9, of housing 10 and is shielded from light entering the aperture by opening shutter blade 116 when the blade is latched. Assuming that the photocurrent is at a predetermined minimum value, the LASCR will trigger when the cathode-to-gate voltage reaches a threshold voltage.

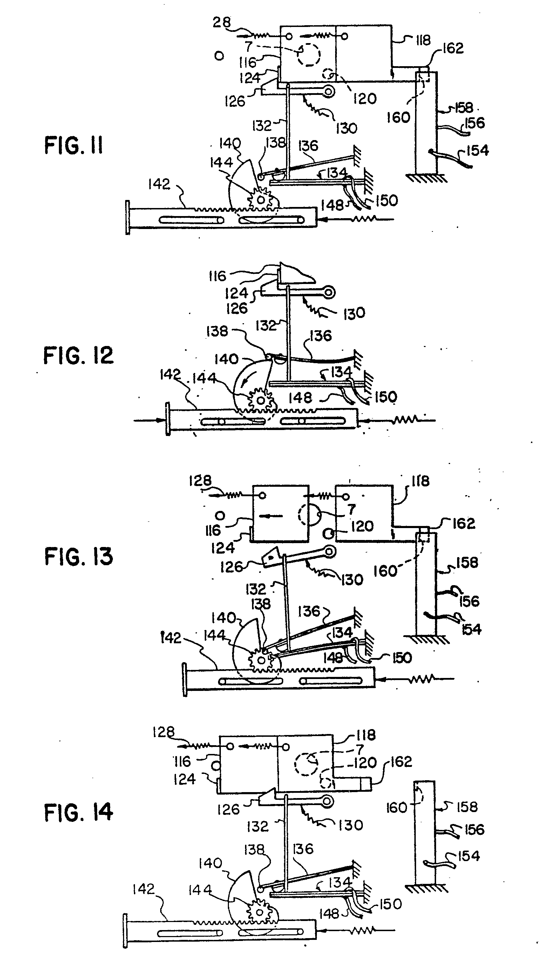

Figs. 11—14 show the camera elements in their various positions during a complete exposure cycle. In Fig. 11, the camera is shown cocked. To begin an exposure, the operator manually pushes rack 142, comprising the camera shutter release, to the right to rotate pinion 144 and spiral cam 140 anticlockwise. Follower road 138 follows the dam surface to flex spring strip 136 to the cocked position as shown in Fig. 12. Continued rotation of cam 140 frees follower 138 to permit rapid unbending of spring strip 136 to the released position so that the striker carried by strip 136 impacts upon bimorph generator 134, bending the free end of the generator downwardly, thereby causing rod 132 to draw latch 126 away from tab 124 and release opening shutter blade 116 for movement to the left.

Fig. 13 shows the positions of the elements shortly after latch 126 has opened and before blade 116 has reached the end of its leftward travel. Spring strip 136 has propelled its striker member into bimorph generator 134, bending the bimorph to generate an electrical potential difference between the bimorph's strips. That potential difference is of a sign which forward biases a diode 174 (Fig. 10) in shutter control circuit 152 to short out the charge over the bimorph 134.

As spring 136 and bimorph generator 134 return toward their Fig. 14 unflexed positions due to their internal spring force, a transient electrical charge builds up across the bimorph having a sign which reverse biases diode 174. That charge is presented at the cathode of LASCR 122. Since a capacitor 176 is effectively a short for a transient signal, the gate and the cathode will initially be at substantially the same potential and the anode-cathode current through the LASCR will be minimal.

When the LASCR is exposed to light, a photocurrent I is initated from the gate electrode. The photocurrent is a function of the light intensity falling upon the LASCR, and begins to charge capacitor 176 according to the equation:

$$dv/dt = I/c, \quad (1)$$

where c is the capacitance of capacitor 176, v is the voltage across 176, and t is time in seconds. Once the potential difference between the gate and the cathode (the voltage built up over capacitor 176) has reached the threshold value, the LASCR triggers, permitting current to pass. Accordingly, when the LASCR triggers, bimorph motor 158 is rapidly charged. As will be explained, this rapid charging of bimorph 158 results in termination of the exposure interval. Therefore, the shutter speed is directly dependent upon the LASCR's photocurrent, which is in turn dependent upon the intensity of scene light.

Of course, LASCR 122 is only one of several suitable devices for delaying the transient signal. For instance, the LASCR may be replaced by an SCR and a photoconductive element for regulating the current through capacitor 176.

As mentioned above, exposure termination is controlled by bimorph 158. The rapidly charging bimorph motor 158 bends in the direction of latch 162 to flex the latch at its hinged region. Because its movement is fast, bimorph 158 will overflex and, at the end of its stroke, will rebound back toward its initial position. The rate of return is enhanced by allowing the charge over the bimorph to be shorted through SCR 164 (Fig. 10). Upon receiving a transient signal from LASCR 122, the SCR 's gate 172 and cathode 168 are substantially equally charged. A current is established through a resistor 178, to charge the capacitor according to equation (1). When there is a sufficient charge difference between gate 172 and cathode 168, so that the cathode-to-gate potential reaches the threshold voltage, SCR fires to short the bimorph 158.

The forwardly accelerating bimorph moving away from latch 162 overcomes friction between protrusion 160 and latch 162 so that closing blade 118 is unlatched and moves to its Fig. 14 position to cover exposure aperture 7; terminating exposure. Residual voltages leak off through SCR 164, resetting the circuit for the next actuation. The shutter blades may be reset by any convenient mechanism.

One advantage of this embodiment is that the exposure time is determined almost entirely by the electrical constants of the system and only slightly by the mechanical characteristics of the bimorph motor.

Like the Figs. 4—8 embodiment, it has the advantage associated with a separately spring-urged shutter blade, that is, that large blades can be accommodated.

The particular construction of the latch is designed to overcome latch friction with a minimum of force from the electrical-mechanical transducer.

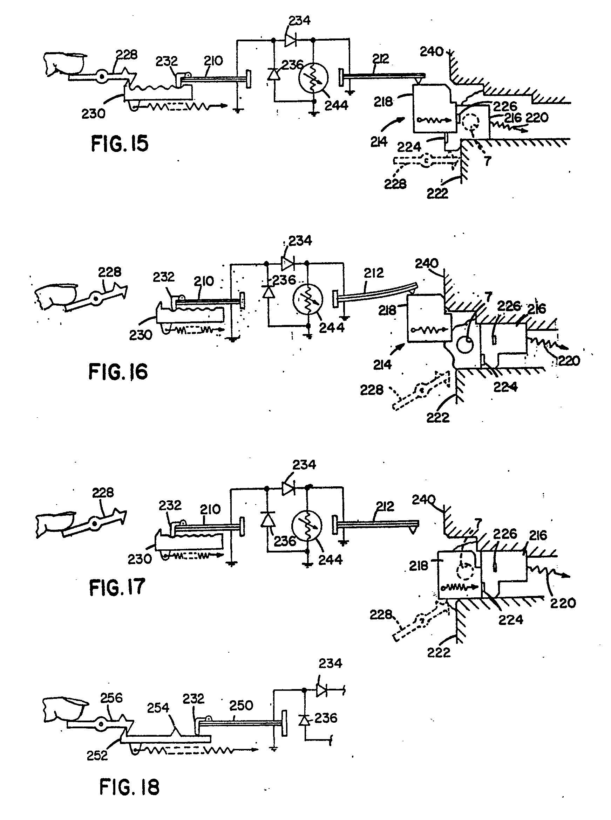

Figs. 15—18 show another embodiment of the invention with an improved form of piezoelectric generator. It also has an alternative mechanism to the Figs. 4—9 and 10—14 embodiments for releasing an exposure terminating member, for example, a closing shutter blade.

Referring to Figs. 15—17, this embodiment includes a piezoelectric generator, for example, a bimorph generator 210, and a piezoelectric electrical-mechanical transducer, for example, a bimorph motor 212 each fixed at one end to the camera housing and adapted for use with a shutter 214. The shutter includes an opening blade 216 and a closing blade 218. When the shutter is in its cocked, Fig. 15 position, blade 216 is latched against the horizontal component of force of a spring 220 by a stop 222, and is held down, to remain latched, by the vertical force component of spring 220. Closing blade 218 is held down by bimorph motor 212 against a tab 224 on opening blade 216 and is held to the left by engagement with a tab 226, also on opening blade 216.

Bimorph generator 210 is cantilevered above a cam bar 230 for actuation as will be described hereinafter. Generator 210 is electrically connected to bimorph motor 212 through a circuit which includes a pair of diodes 234 and 236 and a photoresponsive element 244. Diode 234 serves to transfer the charge from bimorph generator 210 to bimorph motor 212 when the left side of the bimorph generator 210 is being bent upwardly, but to block the return flow of that charge from the bimorph motor as the generator returns to its neutral position. Diode 236 permits the flow of charge from ground to bimorph generator 210 when the bimorph generator is biased more negatively than ground. Positive charge created on bimorph generator 210 when it is flexed upwardly cannot flow through diode 236. Photoresponsive element 244 provides a timing function, as explained below.

To initiate exposure, the operator rotates a latch member 228, acting as the camera shutter release and shown schematically in two places at the left and right sides of the Figures 15 to 18, to the position shown in Fig. 16. This movement pushes shutter blades 216 and 218 upwardly, first latching closing blade 218 behind a wall 240 and then allowing opening blade 216 to clear stop 222 and be moved to the right. This uncovers exposure aperture 7 to initiate exposure. The movement of blade 218 to its Fig. 16 position flexes motor bimorph 212 as shown. This creates an initial charge thereacross with a sign tending to unbend the bimorph, but that charge forward biases diode 234 and 236 and is thereby shorted to ground.

Rotation of latch member 228 also releases spring-biased cam bar 230 for movement from its Fig. 15 position toward its Fig. 16 position as shown at the left side of the figures. As bar 230 moves, a follower 232 on bimorph generator 210 follows the cam surface up the first lobe. This flexes the generator to generate an electric charge. Half of that charge is transferred through a diode 234 and is of a sign which causes an electromotive force in bimorph motor 212 which opposes the internal spring force tending to unbend the motor bimorph.

When the follower is at the top of the first lobe, only half the charge built up by bimorph generator 210 is over that bimorph, the other half being transferred to bimorph motor 212 through diode 234. Now, as follower 232 slides down the cam towards a cam null, that half of the total built up charge which is over bimorph generator 210 will begin to dissipate as the bimorph unflexes. At some point before the bimorph has reached its unstressed condition, there will be no difference between the potential of its two strips. After that point has been reached, and as the bimorph continues to unflex, current will begin to flow from a current source (ground) through a second diode 236 until bimorph 210 is relaxed and follower 232 is at the cam null.

As the follower begins riding up the second lobe, charge will again begin building across generator bimorph 210, but will not be transferred through diode 234 to motor bimorph 212 until the charge on the generator bimorph has reached, and begins to exceed, the level of charge on the motor bimorph. Because of this, only half the amount of charge will be transferred to the motor bimorph by the second generator flexure as transferred by the first flexure. In similar manner, each successive cam lobe encountered by follower 232 will cause only half the charge to be transferred through diode 234 as was transferred by the preceding lobe. Thus, charge will be applied to motor bimorph 212 in repeated steps, each step being half as large as the preceding step. In a very short time relative to the reaction time to release finger pressure on latch member 228, sufficient charge will have been transferred to the motor bimorph to have set up an electromotive force balancing the internal spring force tending to unflex it from its Fig. 16 configuration.

The reader should note that the drawings are not to be considered as being drawn to scale. In fact, while the free end of the bimorph generator may move through a peak-to-peak amplitude of, say, one-tenth inch (2.5 mm), a total movement of the free end of bimorph motor of a few thousandths of an inch may be sufficient to operate the shutter according to the following description. One thousandth of an inch is equivalent to 0.025 mm. Certain features of the drawings have been shown greatly enlarged for clarity of understanding, and latch member 228 has been schematically shown in two places, at the left and right sides of the figures.

As long as the voltage remains across bimorph motor 212, closing blade 218 will be held by wall 240 and exposure aperture 7 will remain open. However, the voltage will begin to decay through a photoresponsive element such as for example a CdS cell 244 at a rate proportional to the intensity of light impinging upon the cell. As the voltage difference between the strips of bimorph motor 212 decreases, the electromotive force holding it flexed also decreases, and the bimorph's internal spring force begins to straighten the bimorph. When sufficient voltage leakage has occurred to straighten bimorph motor 212 to an extent sufficient to push closing shutter blade 218 clear of wall 240, the blade will snap to its Fig. 17 position, terminating exposure. the shutter blades may be returned to their cocked, Fig. 15, positions by suitable means known per se. Similarly cam slide 230 is moved to its Fig. 15 position in preparation for another exposure. As the cam slide travels to the left, follower 232 rotates in a clockwise direction, so as not to bend bimorph generator 210.

Fig. 18 shows an alternative bimorph generator 250 and cam bar 252 which may be used instead of generator 210 and cam bar 230 of Figs. 15, 16 and 17. Cam bar 252 carries a single lobe 254 which, upon release of a latch 256 strikes follower 232 with sufficient energy to cause the free end of bimorph generator 250 to begin oscillating in a damped sinusodial manner.

As in Fig. 15 embodiment, upward flexure of the generator will charge the motor bimorph, not shown, while downward flexure will draw charge from ground. If the energy from the bimorph generator is efficiently coupled electrically to the bimorph motor, a single actuation is capable of supplying sufficient energy to the motor bimorph to actuate the shutter mechanism, not shown, as described with respect to the Fig. 15 embodiment.

Although the latches which constrain shutter blades 216 and 218 in Figs. 15, 16 and 17 (and also Fig. 18) may take any of several forms well known in the art, we have found it desirable to chamfer the interface between the blades and their respective stops 222 and 240 by an angle slightly greater than the angle of repose between the material used in the blades and the stops.

This embodiment is like the Figs. 4—9 embodiment in that dissipation of potential on the bimorph motor releases the closing blade. In this embodiment the bimorph does not function as a latch, but releases an otherwise latched blade. It has the advantage over the other embodiments of being capable of generating high potential with a generator that has relatively small displacement.

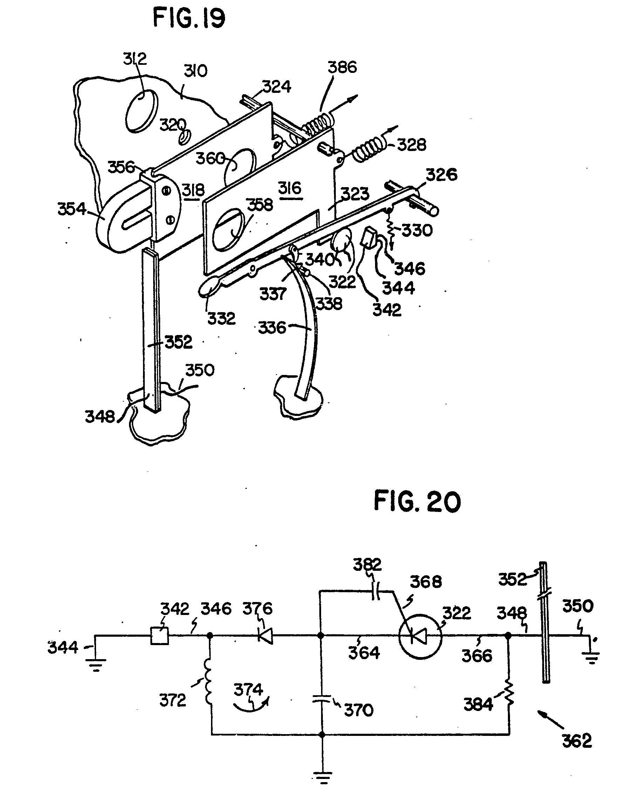

Figs. 19—23 show another embodiment of the invention in which the piezoelectric generator is not a bender, but rather is a small volume of piezoelectric material which generates electrical energy by being struck. In this embodiment an exposure terminating member, for example, a closing shutter blade, is held by a permanent magnet and, similar to Figs. 15—18, is released by direct contact between the exposure terminating member and an electrical-mechanical piezoelectric transducer.

Referring to Fig. 19, camera housing 310 has an exposure aperture 312. Between the aperture and the film plane, a pair of shutter blades, opening blade 316 and closing blade 318, are spring-urged to the right as shown. An exposure control aperture 320 in housing 310 is aligned with a photoresponsive element 322, for example, an LASCR of an electronic shutter control circuit. Light, passing through aperture 320, is normally blocked from the photo-responsive element by a tab 323 on opening blade 316, but reaches the element when the blade moves to the right to initiate exposure, as will be explained hereinafter.

Opening blade 316 has a reset bar 324 which is engaged by a latch member 326 to hold the blade in an aperture-closing position against the force of a spring 328. Latch member 326 is held down by a spring 330. Manual depression of an end portion 332 rotates latch member 326, comprising a camera shutter release, to release reset bar 324.

A striker, for example, a strip of spring steel 336, is cantilever-mounted to housing 310 and carries a hammer 337 at its free end. As will be explained hereinafter, a pin 338 coupled to reset bar 324 in any convenient manner cocks spring strip 336 to its Fig. 19 cocked position where it is held by a latch 340 on latch member 326. A piezoelectric generator, such as, a crystalline or ceramic transducer 342, is positioned in the path of hammer 337 of strip 336.

Piezoelectric generator element 342 is electrically connected by leads 344 and 346 to an electronic shutter-control circuit 362 which will be more fully described with respect to Fig. 20. Also connected to the shutter-control circuit, by leads 348 and 350, is a piezoelectric bender, for example, a bimorph motor 352, fixed at its lower end to housing 310.

The upper end of bimorph motor 352 contacts, or is in close proximity to, the lefthand edge of closing blade 318. Above bimorph motor 352, a fixed, permanent magnet 354 cooperates with a magnetizable keeper 356 screwed onto blade 318 to hold the blade in its Fig. 19 position. Magnet 354 and keeper 356 are shown schematically in the drawings. In practice, the magnetic latch means should be proportioned to present a high holding force against movement of closing blade 318, and a rapidly diminishing force as the distance between the magnet and the blade increases. Blades 316 and 318 are provided with apertures 358 and 360, respectively.

Referring to Fig. 20, shutter-control circuit 362 includes LASCR 322. Normally LASCR 322 presents a very high resistance to current flowing from lead 364 (the cathode side) to lead 366 (the anode side). However, once a redetermined potential difference has been established between the cathode and the LASCR's gate 368, the LASCR triggers and current flows through it from cathode to anode. The gate voltage of an LASCR will leak through that device to create a photocurrent which is a function of the light intensity falling upon the LASCR. It will be recalled that LASCR 322 is aligned with aperture 320 of housing 310 and is shielded from light entering the aperture by opening shutter blade tab 323 when the blade is latched in its Fig. 19 position. Assuming that the photo-current is at a predetermined minimum value, the LASCR will trigger when the cathode-to-gate voltage reaches a threshold voltage.

When piezoelectric generator element 342 is struck, it develops a negative voltage and appears to the rest of circuit 362 like a capacitor with an impedance. Fig. 20 shows a circuit which efficiently transfers the voltage from the generator element to a capacitor 370 for storage. Energy exchange between two capacitors is imperfect. Even at best, when the capacitors are of equal value, the final energy of the combination is only half that originally in the generator. However, there is a substantially perfect exchange of energy between a pure inductor, which stores energy determined by the current through it, and a pure capacitor, which stores energy determined by the voltage across it. Therefore, we have provided a coupling inductor 372 in parallel with the generator element and capacitor 370 so that, as the voltage across the generator element goes down, the current in the inductor goes up, and then as the current in the inductor goes down, the voltage across the capacitor goes up. Assuming no resistance, no energy is lost in such transfers.

Accordingly, the high voltage generated by piezoelectric transducer element 342 is transferred to inductor 372 in the form of current, and current begins to flow in the tuned or "tank" circuit of the inductor and capacitor 370 in the direction of an arrow 374. As the energy stored in the inductor goes down, the voltage over capacitor 370 goes up. A diode 376 prevents the flow of energy from reversing once capacitor 370 is fully charged.

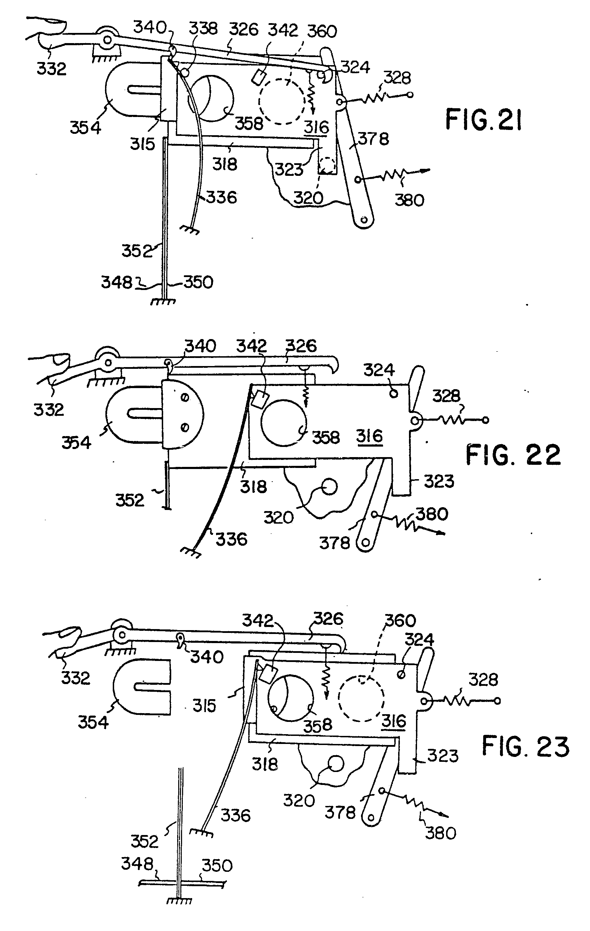

Figs. 21—23 show the camera elements in their various positions during a complete exposure cycle. In Fig. 21, the camera is shown cocked, a crank arm 378 having been rotated against the force of a spring 380 to push reset bar 324 (and thereby both shutter blades) to the left. To begin an exposure, the operator actuates end portion 332 of the camera shutter release to rotate this latch member 326 and thereby frees the opening blade 316 for movement to the right until its aperture 358 is aligned with both exposure aperture 312 and closing blade aperture 360 to initiate exposure. Simultaneously, latch member 340 frees the cocked spring strip 336 to move to its released position so that hammer 337 carried by strip 336 impacts upon piezoelectric generator element 342, creating the electrical voltage for circuit 362. Fig. 22 shows the apparatus during an exposure.

The electrical voltage transferred to capacitor 370 as explained hereinbefore is presented at the cathode of LASCR 322. Because a capacitor 382 is effectively a short for a transient signal, the gate and the cathode will initially be at substantially the same potential and the anode-cathode current through the LASCR will be minimal.

When the LASCR is exposed to light by the removal of tab 323 from alignment with aperture 320, a photocurrent "I" is initiated from the gate electrode. The photocurrent is a function of the light intensity falling upon the LASCR, and begins to charge capacitor 382 according to equation (1).

Once the potential difference between the gate and the cathode (the voltage built up over capacitor 382) has reached the threshold value, the LASCR triggers, permitting current to pass. Accordingly, when the LASCR triggers, bimorph motor 352 will be rapidly charged. As will be explained, this rapid charging of bimorph 352 results in termination of the exposure interval. Therefore, the shutter speed is directly dependent upon the LASCR's photocurrent, which is in turn dependent upon the intensity of scene light. A residual voltage on the bimorph motor must be removed prior to the next exposure cycle, and a resistor 384 is provided for that purpose.

Of course, LASCR 322 is only one of several suitable devices for delaying the transient signal. For instance, the LASCR may be replaced by an SCR and a photoconductive element for regulating the current through capacitor 382.

As mentioned above, exposure termination is controlled by bimorph 352. The rapidly charging bimorph motor 352 bends in the direction of closing shutter blade 318 to push the blade away from permanent magnet 354. As soon as keeper 356 is sufficiently spaced from the magnet, the magnetic attractive force is reduced to a level where it is overcome by the force of a spring 386 and the blade snaps to an aperture-closed position illustrated in Fig. 23.

Like the embodiment shown in Figs. 9—14, this embodiment uses totally electronic timing rather than the mechanical-electronic timing of the other embodiments.

The piezoelectric transducer release of a magnetic latch has the advantage of extremely fast and accurate response to the LASCR trigger. The beginning of timing also is accurately controlled by the uncovering of exposure control aperture 320 by opening blade 316.

Other, more sophisticated structures are readily suggested to those skilled in the art. For example, the Figs. 19—23 embodiment could easily be modified to perform as a diaphragm-shutter. In such an embodiment opening blade 316 is constructed as two oppositely moving mechanically linked blades forming an exposure aperture which varies gradually from closed to totally open as tab 323 moves to the right. Closing blade 318 could function as shown in Figs. 19—23. Preferably, however, it is replaced by an exposure terminating member, held by a permanent magnet, and releasable by a piezoelectric bender, such as, bimorph motor 352, which exposure terminating member engages tab 323 to move it rapidly to the left, closing the shutter upon triggering of the circuit. The opening blades are constructed to open somewhat more slowly than in the Figs. 19—23 embodiment. In this embodiment, the opening blades would not fully open before being closed in high light situations (and medium light situations, if desired), thereby attenuating both aperture and exposure time simultaneously.

Most of the embodiments show separately latched and released shutter blades. However, a single bladed shutter could be driven open by a separately cocked shutter driver, held by a latch, and released by a piezoelectric tansducer after a controlled time delay. Similarly, the piezoelectric transducer need not move to release the shutter blade. Merely a change in the force exerted by such an element functioning as a latch can be sufficient to release an exposure terminating member.

The exposure terminating member need not be a closing blade. For example, it is well known to use a separate driver to drive a shutter closed, especially when multileaf shutters are used.

## Claims

1. A camera including an automatic control mechanism (22, 24 and 26; 22, 24 and 46; 25, 31 and 33; 160 162; 218 and 240; 318), which requires the supply of mechanical energy in operation, incorporating an electrical circuit (16; 66; Figure 8; 152, 234, 236 and 244; 362) which requires the supply of electrical energy in operation, and including a photo-responsive element (18, 122, 244, 322) having an electrical parameter which varies as a function of a scene characteristic to provide a signal which controls or provides the mechanical energy, characterised by the use of piezoelectric means acting as a transducer (14, 29, 158, 212, 352) for converting electrical energy to supply the said mechanical energy to the said mechanism, and acting as a generator (10, 29, 134, 210, 250, 342) for converting mechanical energy to supply the said electrical energy to the said circuit (16, 66, 152, 362).

2. A camera according to Claim 1 wherein the piezoelectric generator comprises a piezoelectric bender (10, 29, 134, 210, 250), being a piezoelectric element which exhibits the mechanical aspect of its piezoelectricity by bending or by being bent.

3. A camera according to Claim 2 wherein the bender is arranged to be bent manually Figs 1—3).

4. A camera according to Claim 3 further including a mechanism (40, 42) for bending said bender in preparing the camera for picture taking (Figs 4—8).

5. A camera according to Claim 4, characterised in that said mechanism for bending said bend also includes means for cocking a shutter.

6. A camera according to Claim 1, further characterized by the provision of a mechanism (136, 228, 230, 232, 336, 337, 340) for mechanically stressing said generator in response to actuation of a camera shutter release (Figs 9—14, 15—18, 19—23).

7. A camera according to Claim 6 characterised by a striker (136, 336) movable between a cocked position and a released position for striking said piezoelectric generator and further characterized in that said striker is releasable from its cocked position in response to actuation of a camera shutter release (142, 326) (Figs 9—14, 19—23).

8. A camera according to Claim 2 characterized by means (230, 254) for flexing said bender (210) more than one time for each exposure and further characterized in that said means (212) stores electrical energy received from flexing of said bender (210) including energy in addition to that supplied by the first flexing of said bender (210) (Figs 15—18).

9. A camera according to Claim 1 wherein said circuit includes means (370) for receiving and storing electrical energy from said generator until used by said control mechanism.

10. A camera according to Claim 9 wherein said means for storing energy is a capacitor (370) and said circuit includes an inductor (372) to assist transfer of energy from said generator to said capacitor (Figs 19—23).

11. A camera according to Claims 1 to 10 in which camera the automatic control mechanism is an automatic exposure control mechanism which includes means (22, 24 and 26; 22, 24 and 46; 25, 31 and 33; 160 and 162; 218 and 240; 318) for varying the amount of light admitted to the camera during exposure.

12. A camera according to Claim 11 wherein said mechanism for varying the amount of light admitted during exposure includes a shutter (26, 27 and 28; 116 and 118; 214; 316 and 318) whose open and closed positions are a function of an electrical potential on said piezoelectric transducer.

13. A camera according to Claim 11, which camera has separate opening (116, 316) and closing (118, 318) shutter blades movable from latched to released positions to open and close the exposure aperture respectively, and in which said circuit (152, 362) is a timing circuit whose timing function is begun by the movement of the opening blade to open the shutter, characterized in that said opening blade blocks scene light from a photoresponsive element (122, 322) in said timing circuit when said opening blade is in its latched position and permits light to reach that photoresponsive element when said opening blade is in its released position to begin the timing interval of said circuit (Figs 9—14, 19—23).

14. A camera according to Claim 11 characterized in that said generator and said transducer are connected by said circuit (16) to transmit energy directly from said generator (10) to said transducer (14) to flex said transducer in a first direction the energy being dissipated as a function of said parameter to permit said transducer to flex in the opposite direction, and characterized further in that said shutter (26) is connected to said transducer to move with said transducer to open said shutter when said transducer flexes in the first direction and to close said shutter at a speed which is a function of scene light when said transducer flexes in said opposite direction.

15. A camera according to Claim 11 further characterized in that said transducer (29) also is said generator (29) (Figs. 4—8).

16. A camera according to Claim 15 further characterized by means (40, 42) for mechanically stressing said transducer (29) to a flexed condition to create electrical energy on said transducer, means (40) for retaining said transducer in its flexed condition, means (50) in said circuit for dissipating, while said transducer remains flexed, the said electrical energy, and the return movement of said transducer (29) from said flexed condition being controlled by said circuit (18, 35, 37, 50) and means (25, 27, 28) associated with said transducer (29) for controlling the amount of exposing light admitted to said camera during exposure as a function of the speed of the return movement of said transducer (29).

17. A camera according to Claim 16 further characterized in that said means for controlling the amount of exposing light comprises means (25) movable with said transducer for releasing a shutter closing member during said return movement.

18. A camera according to Claim 17 further characterized in that said releasing means (25) includes a latch for holding both an opening shutter blade (27) and a closing shutter blade (28), which latch is arranged to release said blades at different positions of the return movement of said transducer (29).

19. A camera according to Claim 11 wherein said exposure control mechanism includes an exposure terminating member (28, 118, 218, 318) held in a shutter-open position by a latch (25, 160 and 162, 240, 354), from which shutter-open position said exposure terminating member is releasable to move under spring- urging to terminate exposure, characterized in that release of said exposure terminating member is controlled by said piezoelectric transducer (29, 158, 212, 352) as a function of said electrical parameter (Figs. 4—8, 9—14, 15—18, 19—23).

20. A camera according to Claim 19 wherein said exposure terminating member is latched directly by said piezoelectric transducer (Fig. 4—8, 9—14) or by a protrusion thereon.

21. A camera according to Claim 19 wherein said circuit includes means (122 and 176; 322 and 382) for delaying the application of an electrical signal to said piezoelectric transducer by an interval which is a function of said parameter and wherein said exposure terminating member is releasable in response to said signal (Figs. 9—14, 19—23).

22. A camera according to Claim 19, wherein said latch is a permanent magnet (354) and wherein said piezoelectric transducer (352) is adapted to apply mechanical force directly to said exposure terminating member to release it from said permanent magnet in response to an electrical signal from said circuit (Figs. 19—23).

23. A camera according to Claim 11 wherein said control mechanism includes means for gradually varying the exposure aperture from a minimum size to a maximum size and means controllable by said piezoelectric transducer for closing said aperture after a time delay which is a function of said parameter to vary both aperture size and exposure time as a function of scene light.

24. A camera according to Claim 11 wherein said means for varying the amount of light includes means (46) mechanically controlled by said piezoelectric transducer for varying the size of the exposure aperture as a function of said electrical parameter (Fig. 3).

25. A camera according to any of Claims 11—24 wherein said piezoelectric transducer is a piezoelectric bender (14, 158, 212, 352).

**Patentansprüche**

1. Kamera mit einem automatischen Steuermechanismus (22, 24 und 26; 22, 24 und 46; 25, 31 und 33; 160 und 162; 218 und 240; 318), dem bei Betrieb mechanische Energie zugeführt werden muß und der eine elektrische Schaltung (16; 66; Fig. 8; 152, 234, 236 und 244; 362) un umfaßt, der bei Betrieb elektrische Energie zugeführt werden muß und die ein auf Licht ansprechendes Element (18, 122, 244, 322) enthält, das einen elektrischen Parameter besitzt, der sich in Abhängigkeit von einer Charakteristik des Aufnahmegegenstandes ändert und so ein Signal liefert, das die mechanische Energie steuert oder zuführt, gekennzeichnet durch die Verwendung piezoelektrischer Mittel, die zur Umwandlung elektrischer Energie in die dem Mechanismus zuzuführende mechanische Energie als Wandler (14, 29, 158, 212, 352) und zur Umwandlung mechanischer Energie in die der Schaltung (16, 66, 152, 362) zuzuführende elektrische Energie als Generator (10, 29, 134, 210, 250, 342) wirken.

2. Kamera nach Anspruch 1, dadurch gekennzeichnet, daß der piezoelektrische Generator ein piezoelektrisches Biegeelement (10, 29, 134, 210, 250) aufweist, wobei es sich um ein piezoelektrisches Element handelt, das aufgrund seiner piezoelektrischen Eigenschaften beim Biegen oder beim Gebogenwerden eine mechanische Wirkung ausübt.

3. Kamera nach Anspruch 2, dadurch gekennzeichnet, daß das Biegeelement so angeordnet ist, daß es von Hand gebogen werden kann (Fig. 1—3).

4. Kamera nach Anspruch 3, dadurch gekennzeichnet, daß sie eine mechanische Vorrichtung (40, 42) enthält, durch die das Biegeelement beim Uberführen der Kamera in ihre Aufnahmestellung gebogen wird (Fig. 4—8).

5. Kamera nach Anspruch 4, dadurch gekennzeichnet, daß die mechanische Vorrichtung zum Biegen des Biegeelements außerdem Mittel zum Spannen eines Verschlusses umfaßt.

6. Kamera nach Anspruch 1, dadurch gekennzeichnet, daß eine mechanische Vorrichtung (136, 228, 230, 232, 336, 337, 340) zur mechanischen Beanspruchung des Generators in Abhängigkeit von der Betätigung eines Kameraverschlußauslösers vorgesehen ist (Fig. 9—14, 15—18, 19—23).

7. Kamera nach Anspruch 6, dadurch gekennzeichnet, daß ein Schlagelement (136, 336) vorgesehen ist, das zum Ausüben eines Schlags auf den piezoelektrischen Generator zwischen einer Spann- und einer Auslösestellung bewegbar ist, und daß das Schlagelement in Abhängigkeit von der Betätigung eines Kameraverschlußauslösers (142, 326) aus seiner Spannstellung freigebbar ist (Fig. 9—14, 19—23).

8. Kamera nach Anspruch 2, dadurch gekennzeichnet, daß Mittel (230, 254) vorgesehen sind, durch die das Biegeelement (210) bei jeder Belichtung mehr als einmal elastisch gebogen wird, und daß die Mittel (212) die elektrische Energie speichern, die ihnen durch das erste wie auch das weitere Biegen des Biegeelements (210) zugeführt wird (Fig. 15—18).

9. Kamera nach Anspruch 1, dadurch gekennzeichnet, daß die Schaltung Mittel (370) enthält, die von dem Generator gelieferte Energie so lange aufnehmen und speichern, bis sie von dem, Steuermechanismus genutzt wird.

10. Kamera nach Anspruch 9, dadurch gekennzeichnet, daß die Mittel zum Speichern von Energie aus einem Kondensator (370) bestehen und die Schaltung eine Spule (372) enthält, mit deren Hilfe Energie von dem Generator auf den Kondensator übertragen wird (Fig. 19—23).

11. Kamera nach den Ansprüchen 1—10, dadurch gekennzeichnet, daß der automatische Steuermechanismus als Mechanismus zur automatischen Belichtungssteuerung ausgebildet ist und Mittel (22, 24 und 26; 22, 24 und 46; 25, 31 und 33; 160 und 162; 218 und 240; 318) umfaßt, mit denen die während der Belichtung in die Kamera eintretende Lichtmenge variiert werden kann.

12. Kamera nach Anspruch 11, dadurch gekennzeichnet, daß der Mechanismus zum Variieren der bei der Belichtung einfallenden Lichtmenge einen Verschluß (26, 27 und 28; 116 und 118, 214, 316 und 318) unfaßt, dessen Offen- und Schließstellung von einem an piezoelektrischen Wandler anliegenden elektrischen Potential abhängt.

13. Kamera nach Anspruch 11, mit einem Verschluß mit getrennten Öffnungs- (116, 316) und Schließlamellen (118, 318), die aus einer verriegelten in eine entriegelte Stellung bewegbar sind, um die Belichtungsöffnung freizugeben bzw. zu schließen, wobei die Schaltung (152, 362) als Zeitsteuerschaltkreis ausgebildet ist, dessen Zeitsteuerung mit der Bewegung der Öffnungslamelle zum Öffnen des Verschlusses einsetzt, dadurch gekennzeichnet, daß die Öffnungslamelle verhindert, daß Licht vom Aufnahmegegenstand auf ein im Zeitsteuerschaltkreis befindliches, auf Licht ansprechendes Element (122, 322) gelangt, wenn sich die Öffnungslamelle in ihrer verriegelten Stellung befindet, und zuläßt, daß Licht auf das auf Licht ansprechende Element fällt, wenn sich die Öffnungslamelle in ihrer entriegelten Stellung befindet, in der der Zeitsteuerzyklus des Zeitsteuerschaltkreises beginnt (Fig. 9—14, 19—23).

14. Kamera nach Anspruch 11, dadurch gekennzeichnet, daß der Generator und der Wandler über die Schaltung (16) so miteinander verbunden sind, daß Energie direkt von dem Generator (10) auf den Wandler (14) übertragen und dadurch der Wandler in einer ersten Richtung elastisch durchgebogen wird und daß die Energie dann in Abhängigkeit von dem vorgenannten Parameter abgeleitet wird, so daß sich der Wandler in entgegengesetzter Richtung durchbiegen kann, und daß der Verschluß (26) so mit dem Wandler verbunden ist, daß er sich zusammen mit diesem bewegt und sich öffnet, wenn sich der Wandler in der ersten Richtung durchbiegt, und schließt, wenn sich der Wandler in entgegengesetzter Richtung durchbiegt.

15. Kamera nach Anspruch 11, dadurch gekennzeichnet, daß der Wandler (29) zugleich den Generator (29) bildet (Fig. 4—8).

16. Kamera nach Anspruch 15, gekennzeichnet, durch Mittel (40, 42), die den Wandler (29) durch mechanische Beanspruchung in einen elastisch gebogenen Zustand bringen, wodurch in ihm elektrische Energie erzeugt wird, Mittel (40), die den Wandler in seinem elastisch gebogenen Zustand halten, Mittel (50) in der Schaltung zum Ableiten der elektrischen Energie, während der Wandler in seinem gebogenen Zustand verbleibt, wobei die Rückbewegung des Wandlers (29) aus seinem gebogenen Zustand unter Steuerung durch die Schaltung (18, 35, 37, 50) erfolgt, sowie dem Wandler (29) zugeordnete Mittel (25, 27, 28) zum Steuern der während der Belichtung in die Kamera einfallenden Lichtmenge in Abhängigkeit von der Geschwindigkeit der Rückstellbewegung des Wandlers (29).

17. Kamera nach Anspruch 16, dadurch gekennzeichnet, daß die Mittel zum Steuern der Lichtmenge eine Einrichtung (25) umfassen, die zusammen mit dem Wandler bewegbar ist, um bei dessen Rückstellbewegung ein Schließelement des Verschlusses freizugeben.

18. Kamera nach Anspruch 17, dadurch gekennzeichnet, daß die Freigabeeinrichtung (25) eine Klinke zum Halten sowohl einer Öffnungslamelle (27) als auch einer Schließlamelle (28) des Verschlusses enthält, wobei diese Klinke so angeordnet ist, daß sie die Lamellen bei unterschiedlichen Stellungen des Wandlers (29) während seiner Rückstellbewegung freigibt.

19. Kamera nach Anspruch 11, bei der der Belichtungssteuermechanismus ein die Belichtung beendendes Glied (28, 118, 218, 318) aufweist, das in einer Verschluß-Offenstellung von einer Klinke (25, 160 und 162; 240, 354) gehalten wird und aus dieser Verschluß-Offenstellung so freigebbar ist, daß es unter Federdruck eine die Belichtung beendende Bewegung ausführt, dadurch gekennzeichnet, daß die Freigabe des die Belichtung beendenden Gliedes von dem piezoelektrischen Wandler (29, 158, 212, 352) in Abhängigkeit von dem vorgenannten elektrischen Parameter gesteuert wird (Fig. 4—8, 9—14, 15—18, 19—23).

20. Kamera nach Anspruch 19, dadurch gekennzeichnet, daß das die Belichtung beendende Glied direkt mittels des piezoelektrischen Wandlers (Fig. 4—8, 9—14) oder mittels eines an diesem vorgesehenen Vorsprungs verriegelt wird.

21. Kamera nach Anspruch 19, dadurch gekennzeichnet, daß die Schaltung Mittel (122 und 176; 322 und 382) enthält, durch die die Übermittlung eines elektrischen Signals an den piezoelektrischen Wandler um eine Zeitspanne verzögert wird, deren Dauer von dem genannten Parameter abhängt, und daß das die Belichtung beendende Glied in Abhängigkeit von diesem Signal freigebbar ist (Fig. 9—14, 19—23).

22. Kamera nach Anspruch 19, dadurch gekennzeichnet, daß die Klinke ein Dauermagnet (354) ist und der piezoelektrische Wandler (352) auf das die Belichtung beendende Glied direkt eine mechanische Kraft auszuüben vermag, um in Abhängigkeit von einem elektrischen Signal der Schaltung dieses Glied und den Dauermagneten außer Eingriff zu bringen (Fig. 19—23).

23. Kamera nach Anspruch 11, dadurch gekennzeichnet, daß der Steuermechanismus Mittel umfaßt, mit denen die Belichtungsöffnung stufenweise von einer Mindestgröße bis zu einer maximalen Größe veränderbar ist, sowie von dem piezoelektrischen Wandler steuerbare Mittel zum Schließen der belichtungsöffnung nach einer Zeitspanne, deren Dauer von dem genannten Parameter abhängt, derart, daß sowohl die Größe der Belichtungsöffnung als auch die Belichtungszeit in Abhängigkeit von der Aufnahmehelligkeit veränderbar sind.

24. Kamera nach Anspruch 11, dadurch gekennzeichnet, daß die Mittel zum Variieren der Lichtmenge eine von dem piezoelektrischen Wandler mechanisch gesteuerte Einrichtung (46) zur Änderung der Größe der Belichtungsöffnung in Abhängigkeit von dem elektrischen Parameter enthalten (Fig. 3).

25. Kamera nach einem der Ansprüche 11—24, dadurch gekennzeichnet, daß der piezoelektrische Wandler als piezoelektrisches Biegeelement (14, 158, 212, 352) ausgebildet ist.

**Revendications**

1. Appareil photographique de prise de vues incluant un mécanisme de commande automatique (22, 24 et 26; 22, 24 et 46; 25, 31 et 33; 160 et 162; 218 et 240; 318), qui exige en fonctionnement la fourniture d'énergie mécanique, comprenant un circuit électrique (16, 66; Figure 8; 152; 234, 236 et 244; 362), qui exige en fonctionnement la fourniture d'énergie électrique et incluant un organe photosensible (18, 122, 244, 322) présentant un paramètre électrique qui varie en fonction d'une caractéristique d'une scène pour fournir un signal qui commande ou fournit l'énergie mécanique, caractérisé par l'utilisation d'un moyen piézoélectrique agissant en transducteur (14; 29; 158; 212; 352) pour convertir de l'énergie électrique de manière à fournir ladite énergie mécanique audit mécanisme, et agissant en générateur (10, 29, 134, 210, 250, 342) pour convertir de l'énergie mécanique de manière à fournir ladite énergie électrique audit circuit (16, 66, 152, 362).

2. Appareil conforme à la revendication 1, caractérisé en ce que le générateur piézoélectrique comprend un organe piézoélectrique de flexion (10; 29; 134; 210; 250) qui est un organe piézoélectrique manifestant l'aspect mécanique de sa piézoélectricité par flexion ou lorsqu'on le fléchit.

3. Appareil conforme à la revendication 2, dans lequel l'organe piézoélectrique de flexion est agencé de manière à être fléchi manuellement (Figures 1—3).

4. Appareil conforme à la revendication 3, comprenant en outre un mécanisme (40, 42) pour fléchir ledit organe en réponse à la préparation de l'appareil à la prise de vue (Figures 4—8).

5. Appareil conforme à la revendication 4, caractérisé en ce que ledit mécanisme pour fléchir ledit organe comprend aussi un moyen pour armer un obturateur.

6. Appareil conforme à la revendication 1, caractérisé en outre par un mécanisme (136; 228; 230; 232; 336; 337; 340) pour appliquer une contrainte mécanique audit générateur en réponse à l'actionnement d'un organe de déclanchement d'un obturateur formant partie de l'appareil (Figures 9—14); 15—18; 19—23).

7. Appareil conforme à la revendication 6, caractérisé par un percuteur (136; 336) mobile entre une position d'armement et une position de détente, pour percuter le générateur piézoélectrique et caractérisé en outre en ce que ce percuteur quitte sa position d'armement en réponse à l'actionnement d'un organe de déclanchement de l'obturateur (142; 326) (Figures 9-14; 19-23).

8. Appareil conforme à la revendication 2, caractérisé par des moyens (230; 254) pour fléchir ledit organe de flexion (210) plus d'une fois à chaque prise de vue et caractérisé en outre en ce que ledit moyen (212) emmagasine l'énergie produite par flexion de cet organe (210), y compris l'énergie supplémentaire à l'énergie produite par la première flexion de cet organe (210) (Figures 15—18).

9. Appareil conforme à la revendication 1, dans lequel ledit circuit comprend des moyens (370) pour recevoir et conserver de l'énergie venue du générateur jusqu'à son utilisation par ledit mécanisme de commande.

10. Appareil conforme à la revendication 9, dans lequel lesdits moyens comprennent un condensateur (370) et dans lequel ledit circuit comprend une self (372) pour aider au transfert de l'énergie du générateur vers ce condensateur (Figures 19—23).

11. Appareil conforme aux revendications 1 à 10 dans lequel le mécanisme de commande automatique est un mécanisme de commande automatique de l'exposition qui comprend un moyen (22, 24 et 26; 22, 24 et 46; 25, 31 et 33; 160 et 162; 218 et 240; 318) pour faire varier la quantité de lumière pénétrant dans l'appareil pendant une exposition.

12. Appareil conforme à la revendication 11 dand lequel ledit mécanisme pour faire varier la quantité de lumière admise en cours d'exposition comprend un obturateur (26; 27 et 28; 116 et 118; 214; 316 et 318) qui est ouvert ou fermé en fonction d'un potentiel établi sur ledit transducteur piézoélectrique.

13. Appareil conforme à la revendication 11, qui comprend des lames d'obturateur distinctes d'ouverture (116; 316) et de fermeture (118; 318) mobiles d'une position d'enclanchement à une position de déclanchement pour découvrir et recouvrir l'ouverture d'exposition, respectivement, et dans lequel ledit circuit (152; 362) est un circuit de mesure du temps dont le fonctionnement est déclanché par le mouvement de la lame d'ouverture qui ouvre l'obturateur, caractérisé en ce que cette lame d'ouverture protège un organe photosensible (122; 322) formant partie de ce circuit, de la lumière venue de la scène quand cette lame d'ouverture est dans sa position d'enclanchement et permet à la lumière d'atteindre cet organe photosensible quand la lame d'ouverture est dans sa position de déclanchement de manière à ouvrir l'intervalle de temps mesuré par ce circuit (Figures 9—14; 19—23).

14. Appareil conforme à la revendication 11 caractérisé en ce que ledit générateur et ledit transducteur sont reliés par ledit circuit (16) pour transmettre de l'énergie du générateur (10) au transducteur (14) directement, de manière à fléchir le transducteur dans un premier sens et pour dissiper cette énergie en fonction dudit paramètre pour que le transducteur fléchisse en sens opposé, caractérisé en outre en ce que l'obturateur (26) est connecté à ce transducteur pour se déplacer avec lui et s'ouvrir quand le transducer fléchit dans le premier sens, et se fermer avec une vitesse fonction de la luminance de la scène quand le transducteur fléchit dans le sens opposé.

15. Appareil conforme à la revendication 11 caractérisé en outre en ce que le transducteur (29) et le générateur (29) ne font qu'un (Figures 4—8).

16. Appareil conforme à la revendication 15 caractérisé en outre par des moyens (40, 42) pour contraindre mécaniquement ledit transducteur (29) dans un état fléchi de manière à créer de l'énergie électrique dans ce transducteur, un moyen (40) pour retenir le transducteur dans son état fléchi, un moyen (50) dans le circuit pour dissiper ladite énergie électrique tandis que le transducteur reste fléchi, le rappel du transducteur (29) à partir de cet état fléchi étant commandé par ledit circuit (18, 35, 37, 50), et des moyens (25, 27, 28) associés à ce transducteur pour commander la quantité de lumière admise dans l'appareil pendant l'exposition en fonction de la vitesse du transducteur dans son mouvement de rappel.

17. Appareil conforme à la revendication 16 caractérisé en outre en ce que ledit moyen de commande de la quantité de lumière comprend un moyen (25) mobile avec ledit transducteur pour libérer un organe de fermeture de l'obturateur pendant ledit mouvement de rappel.

18. Appareil conforme à la revendication 17, caractérisé en outre en ce que ledit moyen (25) de libération comprend un verrou pour retenir à la fois une lame d'ouverture (27) de l'obturateur et une lame de fermeture (28) de l'obturateur, ledit verrou étant agencé de manière à libérer ces lames en différents points du mouvement de rappel dudit transducteur.

19. Appareil conforme à la revendication 11 dans lequel ledit mécanisme de commande de l'exposition comprend un organe de fin d'exposition (28; 118; 218; 318) retenu dans une position où il découvre l'obturateur par un verrou (25; 160 et 162; 240; 354), ledit organe de fin d'exposition pouvant être relâché de cette position pour se déplacer sous l'action d'un ressort de manière à terminer l'exposition caractérisé en ce que le relâchement de cet organe est commandé par ledit transducteur piézoélectrique (29; 158; 212; 352) en fonction dudit paramètre électrique (Figures 4—8; 9—14; 15—18; 19—23).

20. Appareil conforme à la revendication 19 dans lequel ledit organe de fin d'exposition est verrouillé par ledit transducteur piézoélectrique (Figures 4—8; 9—14) ou par une protubérance de celui-ci.

21. Appareil conforme à la revendication 19 dans lequel ledit circuit comprend des moyens (122 et 176; 322 et 382) pour retarder l'application d'un signal électrique au transducteur, d'un intervalle de temps qui est fonction dudit paramètre, et dans lequel ce signal commande la libération de l'organe de fermeture de l'exposition (Figures 9—14; 19—23).

22. Appareil conforme à la revendication 19, dans lequel ledit agencement de verrouillage est un aimant permanent (354) et dans lequel ledit transducteur piézoélectrique (352) est conçu pour appliquer une force mécanique directement à l'organe de fin d'exposition pour le libérer de l'aimant permanent en réponse à un signal électrique venu dudit circuit (Figures 19—23).

23. Appareil conforme à la revendication 11, dans lequel ledit mécanisme de commande comprend un moyen pour faire varier progressivement l'ouverture d'exposition d'une dimension minimale à une dimension maximale et un moyen commandé par le transducteur pour obturer cette ouverture après un intervalle de temps fonction de ce paramètre de manière à faire varier à la fois la dimension de l'ouverture et la durée d'exposition, en fonction de la luminance de la scène.

24. Appareil conforme à la revendication 11 dans lequel ledit moyen pour faire varier la quantité de lumière comprend un moyen (46) commandé mécaniquement par le transducteur pour faire varier la dimension de l'ouverture d'exposition en fonction dudit paramètre électrique (Figure 3).

25. Appareil conforme à l'une quelconque des revendications 11 à 24, dans lequel ledit transducteur piézoélectrique est un organe piézoélectrique de flexion (14, 158, 212, 352).

FIG. 1

FIG. 2

FIG. 3

FIG. 4

FIG. 5

FIG. 6

FIG. 7

FIG. 8

FIG. 9

SHUTTER CONTROL

FIG. 10

4

FIG. 11

FIG. 12

FIG. 13

FIG. 14

FIG. 15

FIG. 16

FIG. 17

FIG. 18

## FIG.19

## FIG. 20

FIG.21

FIG. 22

FIG. 23